# EUROPÄISCHE PATENTANMELDUNG

(11) **EP 3 599 405 A1**
(43) Veröffentlichungstag der Anmeldung: **29.01.2020**
(21) Anmeldenummer: 18185419.1
(22) Anmeldetag: 25.07.2018
(51) Int. Cl.: F16L 9/18, F01N 13/18, F16L 59/13

(54) **ROHRLEITUNG ZUM HINDURCHLEITEN EINES HEISSEN FLUIDS**

(71) Anmelder: Holter Regelarmaturen GmbH & Co. KG, 33758 Schloß Holte-Stukenbrock (DE)
(72) Erfinder: Wangemann, Matthias, 33758 Schloß Holte-Stukenbrock (DE); Tomenek, Grzegorz Marian, 33161 Hövelhof (DE)
(74) Vertreter: Schober, Mirko

(57) **Zusammenfassung**

Die Rohrleitung (1), insbesondere eine Heißdampfrohrleitung, zum Hindurchleiten eines heißen Fluids, umfasst einen Außenrohrmantel (2) und einen Innenrohrmantel (3). Der Innenrohrmantel (3) ist zumindest abschnittsweise innerhalb des Außenrohrmantels (2) angeordnet, wobei der Innenrohrmantel (3) unter Ausbildung eines Ringspalts (4) gegenüber dem Außenrohrmantel (2) beabstandet und durch mindestens ein im Ringspalt (4) angeordnetes Abstandsmittel an einer Innenseite (2a) des Außenrohrmantels (2) abgestützt ist. Das mindestens eine Abstandsmittel weist eine Mehrzahl elastisch ausgebildeter Federelemente (6) auf.

## Beschreibung

Die Erfindung betrifft eine Rohrleitung, insbesondere Heißdampfrohrleitung, zum Hindurchleiten eines heißen Fluids gemäß dem Oberbegriff von Anspruch 1.

Neben der Möglichkeit zur Feststoffförderung dienen Rohrleitungen im Allgemeinen dem Hindurchleiten und damit dem gerichteten Transport von flüssigen oder gasförmigen Fluiden. Um die sich mit steigender Temperatur des Fluids erhöhenden Anforderungen an derartige Rohrleitungen zu erfüllen, sind diese mitunter doppelwandig ausgebildet.

Hierzu offenbart die DE 1 637 632 U eine Rohrleitung, welche einen Außenrohrmantel und einen Innenrohrmantel umfasst, wobei der Innenrohrmantel zumindest abschnittsweise innerhalb des Außenrohrmantels angeordnet ist. Dabei ist der Innenrohrmantel unter Ausbildung eines Ringspalts gegenüber dem Außenrohr beabstandet. In der konkreten Ausgestaltung ist der zum Hindurchleiten eines überhitzten Fluids vorgesehene Innenrohrmantel dünnwandig ausgeführt, während der Außenrohrmantel demgegenüber dickwandig ausgebildet ist. Diese Ausgestaltung folgt der Tatsache, dass der besonders temperaturfeste dünne Innenrohrmantel unmittelbar durch die Überhitzungstemperatur des Fluids belastet wird, während der nur indirekt mit der Überhitzungstemperatur beaufschlagte dicke Außenrohrmantel dazu ausgelegt ist, den Fluiddruck im Inneren der Rohrleitung aufzunehmen. Der Ringspalt kann zudem zur Hindurchleitung eines weniger heißen Fluids genutzt werden, um die Temperatur der Rohrleitung nach außen hin abzusenken und dieses zu kühlen.

Je nach Überhitzungsgrad des hindurchzuleitenden Fluids sind zusätzliche Kühlvorrichtungen notwendig, um dessen Temperatur durch die aktive Zufuhr eines Kühlmittels, wie etwa Wasser, zu kontrollieren. Hierzu werden beispielsweise lanzenförmige Einspritzkühler durch in der Wandung der Rohrleitung angeordnete Durchgangskanäle hindurchgeführt. Über deren endseitigen Düsenkopf kann das Kühlmittel bedarfsweise, beispielsweise kontinuierlich oder in Intervallen, in den mit dem heißen Fluid durchströmten Rohrleitungsquerschnitt eingespritzt werden. Derartige Kühlvorrichtungen sind beispielsweise aus der DE 197 19 120 A1 bekannt.

Um den Innenrohrmantel innerhalb des Außenrohrmantels zu zentrieren, ist wenigstens ein Abstandsmittel innerhalb des Ringspalts vorzusehen, über welches der Innenrohrmantel an einer Innenseite des Außenrohrmantels abstützbar ist. Üblicherweise ist das Abstandsmittel dabei fest, beispielsweise stoffschlüssig, mit wenigstens einer der beiden Rohrmäntel verbunden.

Aufgrund der hohen Temperaturgradienten von beispielsweise 600°C und der zum Teil alternierenden thermischen Belastungen unterliegt die Abstützung des Innenrohrmantels an dem Außenrohrmantel einer überaus hohen Belastung. Insbesondere fest mit dem Innen- und Außenrohrmantel verbundene Abstandsmittel sind dabei mitunter extremen Spannungen ausgesetzt, die zu vorzeitigem Verschleiß und Materialversagen, beispielsweise durch Rissbildung, führen können.

Der vorliegenden Erfindung liegt daher die Aufgabe zugrunde, eine gattungsgemäße Rohrleitung, insbesondere Heißdampfleitung oder Heißdampfrohrleitung, dahingehend weiterzuentwickeln, dass diese eine möglichst spannungsarme und damit langlebige Zentrierung ihres Innenrohrmantels im Außenrohrmantel aufweist.

Die Lösung dieser Aufgabe besteht nach der Erfindung in einer Rohrleitung mit den Merkmalen von Anspruch 1. Vorteilhafte Ausgestaltungen sind Gegenstand der abhängigen Unteransprüche.

Es wird nun vorgeschlagen, dass das mindestens eine Abstandsmittel der erfindungsgemäßen Rohrleitung eine Mehrzahl elastisch ausgebildeter Federelemente aufweist. Dies meint, dass das Abstandsmittel beispielsweise eine zusammenhängende oder voneinander getrennte Anzahl solcher Federelemente besitzen kann. Ebenso ist denkbar, dass das Abstandsmittel einen Träger umfasst, an dem wenigstens einige der Federelemente angeordnet sein können.

Der sich hieraus ergebende Vorteil ist darin zu sehen, dass der Innenrohrmantel nicht fest innerhalb des Außenrohrmantels angeordnet ist, sondern sich über die elastischen Federelemente insofern elastisch an der Innenseite des Außenrohrmantels abstützt. Hierdurch können beispielsweise aus Temperatureinfluss resultierende radiale Ausdehnungen des Außenrohrmantels und/oder des Innenrohrmantels durch eine zumindest bereichsweise elastische Formänderung der Federelemente kompensiert werden. Spannungen sind hierdurch weitestgehend minimiert oder treten gar nicht mehr auf, so dass eine deutliche Reduzierung in der Belastung des Abstandsmittels erreichbar ist. Dies gilt in gleicher Weise auch für eine beispielsweise aus Temperatureinfluss resultierende mögliche Verschiebung des Innen- und Außenrohrmantels relativ zueinander in eine schräg oder quer zur Längsrichtung der Rohrleitung verlaufende Richtung.

Weiterhin können so auch beispielsweise aus Temperatureinfluss resultierende Längenänderungen des Außenrohrmantels und/oder des Innenrohrmantels durch die lediglich mittels elastischer Abstützung erfolgende Zentrierung des Innerohrmantels über die Federelemente an der Innenseite des Außenrohrmantels kompensiert werden. Die sonst übliche Verwendung unelastischer Abstandsmittel kann insbesondere bei einer radialen Querschnittsänderung eines der beiden Rohrmäntel zu Verspannungen führen. In deren Folge ist ein solcher Längsausgleich nicht möglich, so dass sich mitunter hohe Spannungen innerhalb der Rohrleitung aufbauen und das Abstandsmittel belasten.

Die Federelemente können an einer Außenseite des Innenrohrmantels oder an der Innenseite des Außenrohrmantels befestigt sein. Bevorzugt kann die jeweilige Befestigung nur einen Teil des Federelements betreffen, so dass deren restlichem Teil jene für die elastische Ausgestaltung erforderliche Bewegungsfreiheit verbleibt. Eine solche Befestigung kann beispielsweise über eine lösbare oder unlösbare Verbindung erfolgen. Denkbar hierfür sind beispielsweise Schraub- oder Klemmverbindungen. Weiterhin denkbar sind zumindest bereichsweise formschlüssige Verbindungen. Insbesondere unlösbare Verbindungen können stoffschlüssig ausgestaltet sein, wie etwa durch eine geeignete Klebung, mittels Löten oder Schweißen.

Gemäß einer besonders bevorzugten Weiterbildung des grundsätzlichen Erfindungsgedankens können die einzelnen Federelemente an einem den Innenrohrmantel umgreifenden Stützring angeordnet sein. Alternativ hierzu können die einzelnen Federelemente gemeinsam einen solchen Stützring bilden. Dank der dann in sich quasi elastisch formstabilen Ausgestaltung des Stützrings ist dessen leichte Anordnung an dem Innenrohrmantel oder in dem Außenrohrmantel möglich. So ist der Stützring beispielsweise zunächst auf den Innenrohrmantel aufziehbar, um dann zusammen mit Innenrohrmantel in den Außenrohrmantel geschoben zu werden. Denkbar in diesem Zusammenhang sind auch etwaige Sicherungsmaßnahmen, um die Lage des Stützrings um den Innenrohrmantel oder in dem Außenrohrmantel zu fixieren. Hierzu kann beispielsweise eine wie bereits zuvor beschriebene Art von Verbindung genutzt werden.

Die Erfindung sieht vor, dass sich die Federelemente parallel zu einer Längsrichtung der Rohrleitung erstrecken können. Dabei können die Federelemente bevorzugt in Umfangsrichtung des Stützrings nebeneinander angeordnet sein. Diese Ausrichtung der Federelemente wirkt sich vorteilhaft auf die in oder entgegen der Längsrichtung der Rohrleitung unter Temperatureinwirkung erfolgende Ausdehnung der beiden Rohrmäntel relativ zueinander aus.

Angesichts der bevorzugten Ausgestaltung des Abstandsmittels als Stützring besteht eine besonders bevorzugte Weiterbildung der erfindungsgemäßen Rohrleitung darin, dass der Stützring einen rohrabschnittsförmigen Grundkörper besitzen kann. Die Federelemente können dabei durch bevorzugt parallel oder schräg zur Längsrichtung der Rohrleitung verlaufende, innerhalb des Grundkörpers angeordnete Schlitze ausgebildet sein. In Bezug auf in Längsrichtung der Rohrleitung zueinander beabstandete Längskanten des Grundkörpers des Stützrings können die Schlitze von nur einer dieser Längskanten ausgehen und sich in Richtung der gegenüberliegenden Längskante erstrecken. Alternativ hierzu können die Schlitze sich von beiden Längskanten aus zur jeweils anderen Längskante des Grundkörpers hin erstrecken.

Gemäß einer bevorzugten Weiterbildung des so ausgestalteten Abstandsmittels können die Schlitze des Stützrings derart angeordnet sein, dass eine durch die Schlitze begrenzte Mantelfläche des Grundkörpers einen mäanderförmigen Verlauf aufweist. Mit anderen Worten kann die nach dem Schlitzen verbliebene Mantelfläche des Grundkörpers entsprechend mäanderförmig strukturiert sein. Der dabei naturgemäß abwechselnde Beginn der nebeneinander angeordneten Schlitze an jeweils einer der Längskanten des Grundkörpers bietet eine überaus formtreue und belastbare Ausgestaltung des dabei elastischen Abstandsmittels.

Durch die Anordnung der Schlitze innerhalb des Grundkörpers des Stützrings ist insgesamt eine überaus einfache und kostengünstige Fertigung des Abstandsmittels möglich. Auf diese Weise sind insbesondere die Federelemente des Abstandsmittels durch eine im Wesentlichen einfache Bearbeitung (Schlitzen) seines Grundkörpers herstellbar, so dass ein mitunter aufwändiges Anordnen der einzelnen Federelemente entfallen kann.

Um die elastischen Eigenschaften des Abstandsmittels zu gewährleisten, müssen dessen Federelemente einen zumindest bereichsweise parallel zur Längsrichtung der Rohrleitung abweichenden Verlauf aufweisen. Hinsichtlich der bevorzugten Ausgestaltung des Abstandsmittels als Stützring kann dieser zumindest abschnittsweise die Form eines, insbesondere einschaligen, Hyperboloids aufweisen. Alternativ hierzu kann der Stützring zumindest abschnittsweise die Form eines, insbesondere einschaligen, Ellipsoids besitzen. Dies meint, dass der Mittenabschnitt jedes Federelements beispielsweise außerhalb einer Ebene liegt, innerhalb der die zugehörigen Endabschnitte des jeweiligen Federelements liegen.

Durch die sich hierdurch naturgemäß einstellende Form des Stützrings ist eine besonders vorteilhafte elastische und gleichzeitig stabile Ausgestaltung des Abstandsmittels gegeben.

Grundsätzlich sieht die Erfindung vor, dass zumindest einige der Federelemente eine Krümmung aufweisen können. Die Krümmung kann bevorzugt derart ausgebildet sein, dass der zwischen den beiden Endabschnitten eines gekrümmten Federelements gelegene Mittenabschnitt dieses Federelements einen zumindest bereichsweisen Kontakt zur Innenseite des Außenrohrmantels oder zu einer Außenseite des Innenrohrmantels aufweisen kann. Mit anderen Worten hat dabei entweder der Innenrohrmantel oder der Außenrohrmantel mit den Endabschnitten eines Federelements Kontakt, während dessen Mittenabschnitt sich an dem jeweils anderen Rohrmantel abstützt.

Um beispielsweise einer etwaigen Kerbwirkung bei einer Verformung der Federelemente des Stützrings vorzubeugen, wird vorgeschlagen, dass die von einer der beiden Längskanten ausgehenden Schlitze jeweils in eine im Bereich der jeweils gegenüberliegenden Längskante gelegene Durchgangsöffnung münden können. Die Durchgangsöffnung kann dabei beispielsweise rund, insbesondere kreisrund, ausgestaltet sein. In jedem Fall wird auf diese Weise ein etwaiger spitzer Winkel im Verbindungsbereich zwischen den nebeneinander angeordneten Federelementen vermieden. In diesem Bereich auftretende Spannungen verteilen sich in vorteilhafter Weise um die jeweilige Durchgangsöffnung, so dass keine schädigenden Spannungsspitzen, insbesondere bei alternierender Dauerbelastung, entstehen können.

Im Rahmen der Erfindung wird es als vorteilhaft angesehen, wenn der Innenrohrmantel wenigstens zwei Mantelabschnitte besitzt. So kann sich der Innenrohrmantel aus wenigstens zwei solchen Mantelabschnitten zusammensetzen. Von diesen kann ein erster Mantelabschnitt eine endseitige Aufweitung aufweisen, in welcher ein Endabschnitt des zweiten Mantelabschnitts zumindest abschnittsweise aufgenommen ist. Auf diese Weise sind die einzelnen Mantelabschnitte des Innenrohrmantels beispielsweise formschlüssig miteinander verbunden. In besonders bevorzugter Weise kann die Aufweitung als Schiebesitz ausgebildet sein, in dem der Endabschnitt des anderen Mantelabschnitts dann entsprechend längsverschieblich aufgenommen ist.

Hierdurch sind in vorteilhafter Weise temperaturbedingte Längenänderungen des Innenrohrmantels zwischen seinen Mantelabschnitten kompensiert. Etwaige Längenänderungen wirken sich dabei nur im Bereich der Aufweitung aus, die aufgrund ihrer Ausgestaltung eine zumindest begrenzte Längenänderung der Mantelabschnitte relativ zueinander zulässt.

Nach einer weiteren Ausgestaltungsform der erfindungsgemäßen Rohrleitung können deren Außenrohrmantel und deren Innenrohrmantel jeweils wenigstens einen Durchgangskanal besitzen. In besonders vorteilhafter Weise können diese Durchgangskanäle miteinander fluchten. Hierdurch ist es möglich, die Rohrleitung mit einer bereits in der Beschreibungseinleitung angesprochenen Kühlvorrichtung, beispielsweise in Form eines Einspritzkühlers, auszustatten.

Die nunmehr vorgestellte erfindungsgemäße Rohrleitung weist überaus vorteilhafte Eigenschaften auf, die sich in einer möglichst spannungsarmen und insofern langlebigen Zentrierung ihres Innenrohrmantels im Außenrohrmantel zeigt. Insbesondere die elastische und dabei Verschiebungen in Längsrichtung der Rohrleitung ermöglichende Ausgestaltung des Abstandsmittels trägt wesentlich dazu bei. In Kombination mit der Stückelung des Innenrohrmantels in einzelne Mantelabschnitte und deren in Längsrichtung verschiebliche Kopplung ermöglicht dies eine überaus spannungsarme Zentrierung des Innenrohrmantels innerhalb des Außenrohrmantels. Der Außenrohrmantel bleibt dabei von den insbesondere aufgrund der Temperaturbelastung auf den Innenrohrmantel einwirkenden Kräften entkoppelt.

Die Erfindung wird nachfolgend anhand von in den Figuren 1 bis 5 dargestellten Ausführungsbeispielen erläutert. Es zeigen:
- Fig. 1: einen Längsschnitt durch eine erste erfindungsgemäße Rohrleitung,
- Fig. 2: einen Querschnitt durch die erfindungsgemäße Rohrleitung aus Fig. 1,
- Fig. 3: eine perspektivische Darstellung eines Stützrings einer alternativen Ausgestaltung der erfindungsgemäßen Rohrleitung aus den Fig. 1 und 2,
- Fig. 4: eine perspektivische Darstellung einer alternativen Ausgestaltungsform des Stützrings aus Fig. 3 sowie
- Fig. 5: die erfindungsgemäße Rohrleitung aus Fig. 1 in einer alternativen Ausgestaltung in ansonsten gleicher Darstellungsweise.

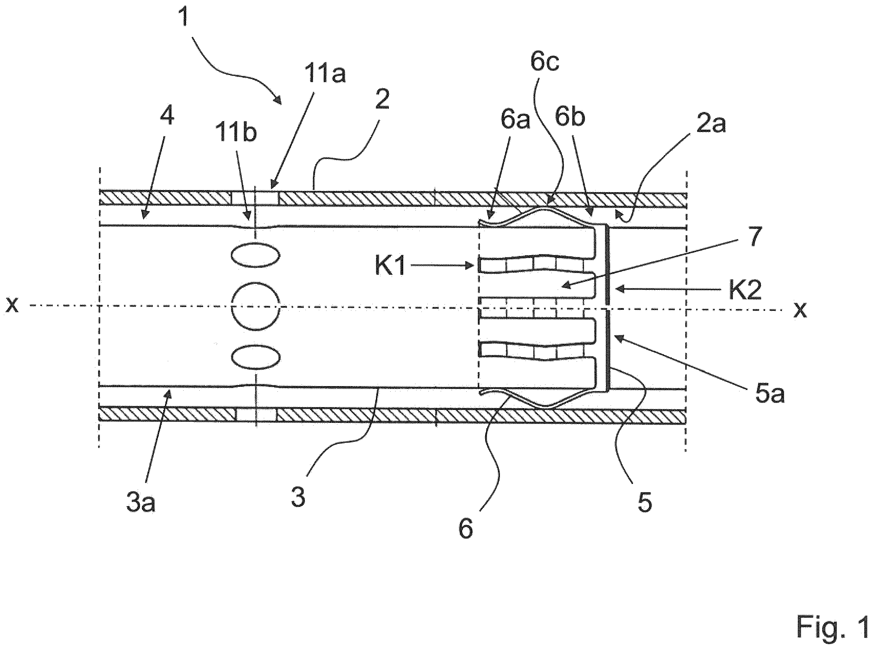

Fig. 1 ist der Längsschnitt durch eine erfindungsgemäße Rohrleitung 1 zu entnehmen. Die Rohrleitung 1 umfasst einen Außenrohrmantel 2 und einen innerhalb des Außenrohrmantels 2 angeordneten Innenrohrmantel 3. Dabei ist der Innenrohrmantel 3 unter Ausbildung eines Ringspalts 4 gegenüber dem Außenrohrmantel 2 beabstandet. Innerhalb des Ringspalts 4 ist ein Abstandsmittel angeordnet, welches vorliegend einen Stützring 5 mit einer Mehrzahl von an diesem angeordneten, elastisch ausgebildeten Federelementen 6 besitzt. Der Stützring 5 ist so ausgebildet, dass dieser einen Abschnitt des Innenrohrmantels 3 umgreift. Durch die Anordnung innerhalb des Ringspalts 4 ist der Innenrohrmantel 3 über die Federelemente 6 des Abstandsmittels an einer Innenseite 2a des Außenrohrmantels 2 abgestützt.

Wie zu erkennen, sind die Federelemente 6 dabei in Umfangsrichtung des Stützrings 6 nebeneinander angeordnet, wobei sie sich parallel zu einer Längsrichtung x der Rohrleitung 1 erstrecken. Jedes der Federelemente 6 ist dabei derart gekrümmt, dass diese jeweils zwei Endabschnitte 6a, 6b und einen zwischen diesen Endabschnitten 6a, 6b und dabei außerhalb der Ebene der beiden Endabschnitte 6a, 6b gelegenen Mittenabschnitt 6c besitzen. Hierdurch weisen die beiden Endabschnitte 6a, 6b jedes Federelements 6 einen zumindest bereichsweisen Kontakt zu einer Außenseite 3a des Innenrohrmantels 3 auf, während die Mittenabschnitte 6c jedes Federelements 6 in einem zumindest bereichsweisen Kontakt mit der Innenseite 2a des Außenrohrmantels 2 stehen.

Sowohl Außenrohrmantel 2 als auch Innenrohrmantel 3 besitzen miteinander fluchtende Durchgangskanäle 11a, 11b, von denen ein Durchgangskanal 11a durch die Wandung des Außenrohrmantels 2 hindurch und ein Durchgangskanal 11b durch die Wandung des Innenrohrmantels 3 hindurch angeordnet ist. Die Durchgangskanäle 11a, 11b können der Aufnahme einer hier nicht näher gezeigten Kühlvorrichtung dienen.

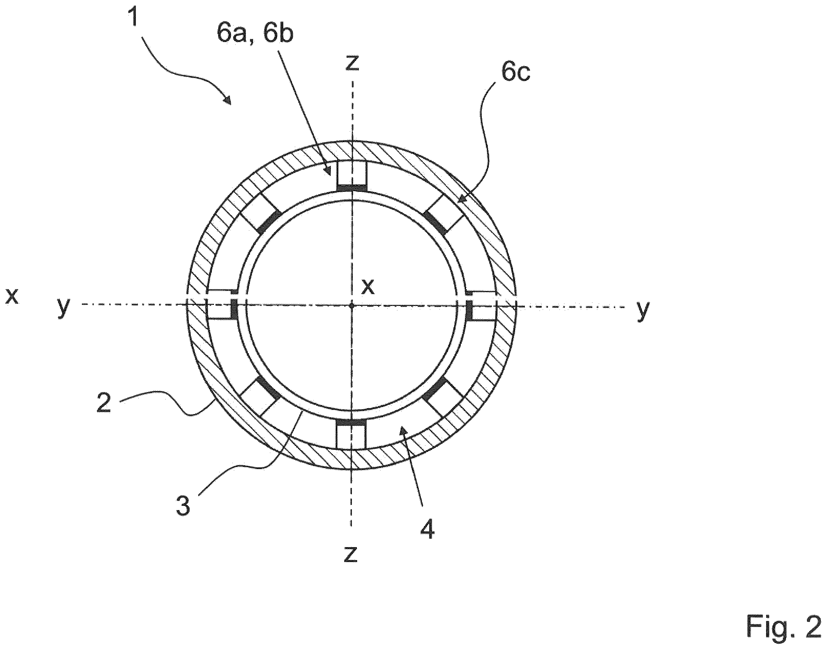

Fig. 2 zeigt einen Querschnitt durch die sich in eine Querrichtung y sowie Hochrichtung z ausdehnende Rohrleitung 1, der insbesondere die Lage und Beabstandung der in Umfangsrichtung um den Innenrohrmantel 3 herum angeordneten Federelemente 6 verdeutlicht. Vorliegend sind insgesamt acht Federelemente 6 in gleichen Abständen angeordnet, über die der Innenrohrmantel 3 elastisch innerhalb des Außenrohrmantels 2 zentriert ist.

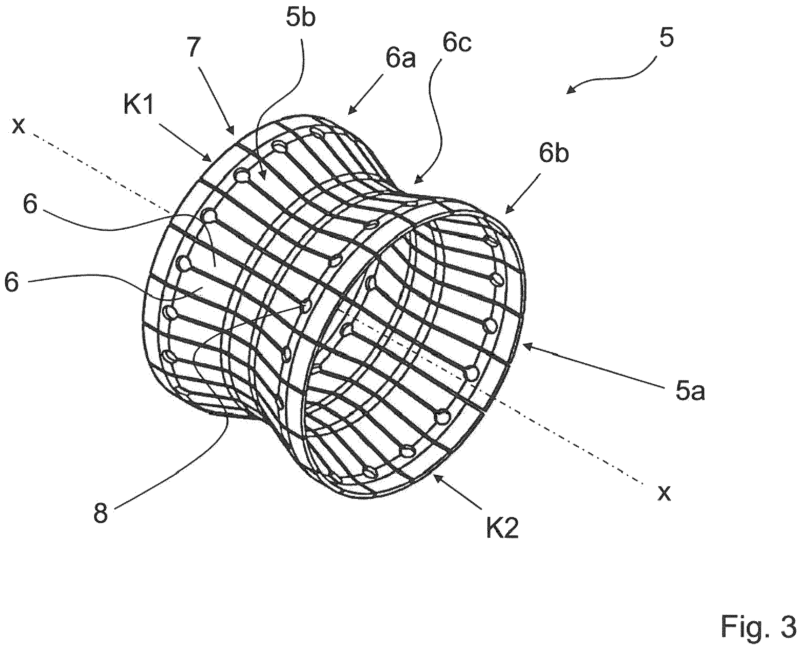

Fig. 3 zeigt eine alternative Ausgestaltung des Abstandsmittels in Form eines im Wesentlichen insbesondere einschaligen Hyperboloids. Hierdurch können die Endabschnitte 6a, 6b seiner Federelemente 6 mit der Innenseite 2a des Außenrohrmantels 2 in Kontakt gelangen, während sich die Mittenabschnitte 6c seiner Federelemente 6 an der Außenseite 3a des Innenrohrmantels 3 abstützen.

Erkennbar bilden dessen einzelnen Federelemente 6 nunmehr gemeinsam den Stützring 5. Der Stützring 5 besitzt einen rohrabschnittsförmigen Grundkörper 5a, der von seinen beiden Längskanten K1, K2 ausgehende und sich unter Ausbildung der Federelemente 6 in Richtung der jeweils gegenüberliegenden Längskante K1, K2 erstreckende Schlitze 7 aufweist. Die Schlitze 7 sind hierbei so angeordnet, dass eine durch die Schlitze 7 begrenzte und von dem Grundkörper 5a verbliebene Mantelfläche 5b des Stützrings 5 einen mäanderförmigen Verlauf aufweist. Die von jeweils einer der beiden Längskanten K1, K2 ausgehenden Schlitze 7 münden dabei jeweils in eine im Bereich der jeweils gegenüberliegenden Längskante K1, K2 gelegene Durchgangsöffnung 8.

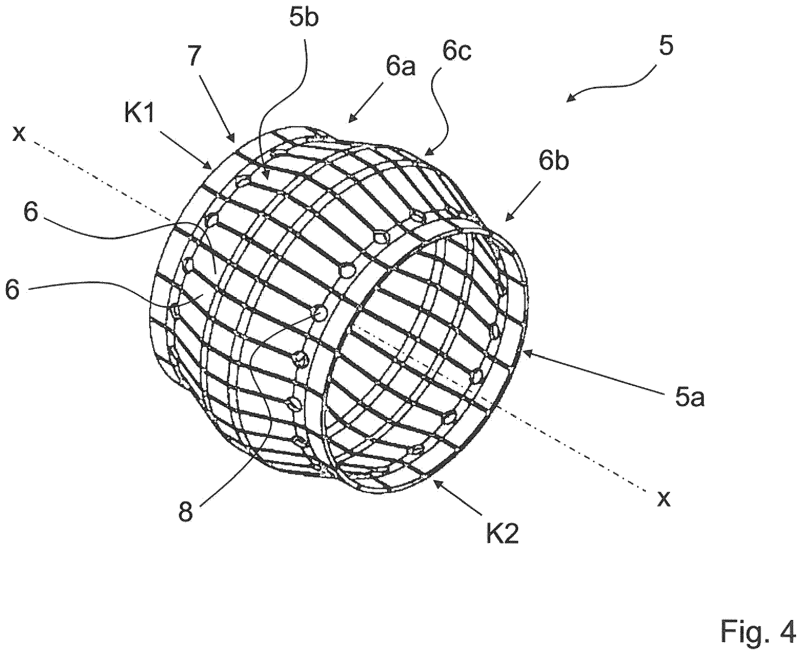

Fig. 4 ist eine alternative Ausführungsform des durch die Federelemente 6 gebildeten Stützrings 5 aus Fig. 3 zu entnehmen. Erkennbar weist der hier gezeigte Stützring 5 nunmehr die Form eines Ellipsoids auf. Hierdurch können die Endabschnitte 6a, 6b seiner Federelemente 6 mit der Außenseite 3a des Innenrohrmantels 3 in Kontakt gelangen, während sich die Mittenabschnitte 6c seiner Federelemente 6 an der Innenseite 2a des Außenrohrmantels 2 abstützen.

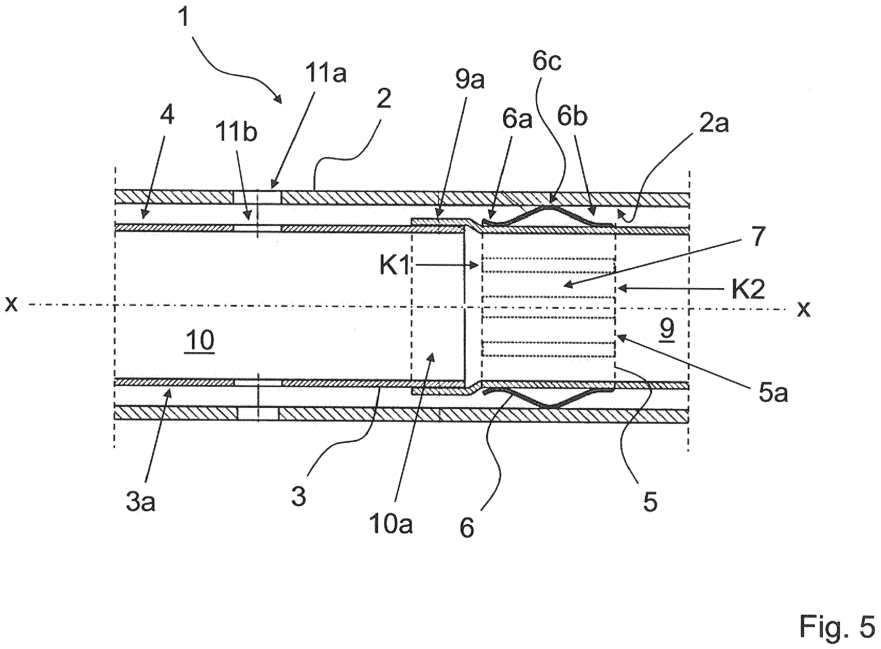

Fig. 5 ist eine weitere Ausführungsform der erfindungsgemäßen Rohrleitung 1 zu entnehmen. Ersichtlich besitzt der Innenrohrmantel 3 hierbei mindestens zwei Mantelabschnitte 9, 10. Selbstverständlich kann dieser weitere Mantelabschnitte 9, 10 umfassen, die aus Übersichtsgründen hier nicht gezeigt sind. Ein erster Mantelabschnitt 9 weist dabei eine endseitige, als Schiebesitz ausgebildete Aufweitung 9a auf, in welcher ein Endabschnitt 10a des zweiten Mantelabschnitts 10 zumindest abschnittsweise aufgenommen ist. Aufgrund der Ausbildung der Aufweitung 9a ist der Endabschnitt 10a des zweiten Mantelabschnitts 10 entsprechend längsverschieblich innerhalb der Aufweitung 9a des ersten Mantelabschnitts 9 aufgenommen, um thermische Dehnungen in Längsrichtung x der Rohrleitung 1 möglichst spannungsfrei auszugleichen.

### Bezugszeichen:

- 1: Rohrleitung
- 2: Außenrohrmantel 2 von 1
- 2a: Innenseite von 2
- 3: Innenrohrmantel von 1
- 3a: Außenseite von 3
- 4: Ringspalt zwischen 2 und 3
- 5: Stützring von 1
- 5a: Grundkörper von 5
- 5b: Mantelfläche von 5a
- 6: Stützring von 1
- 6a: Endabschnitt von 6
- 6b: Endabschnitt von 6
- 6c: Mittenabschnitt von 6
- 7: Schlitz von 5a
- 8: Durchgangsöffnung von 5a
- 9: Mantelabschnitt von 3
- 9a: Aufweitung von 9
- 10: Mantelabschnitt von 3
- 10a: Endabschnitt von 10
- 11a: Durchgangskanal von 2
- 11b: Durchgangskanal von 3

- K1: Längskante von 5
- K2: Längskante von 5
- x: Längsrichtung
- y: Querrichtung
- z: Hochrichtung

## Patentansprüche

1. Rohrleitung (1), insbesondere Heißdampfrohrleitung, zum Hindurchleiten eines heißen Fluids, umfassend einen Außenrohrmantel (2) und einen Innenrohrmantel (3), welcher zumindest abschnittsweise innerhalb des Außenrohrmantels (2) angeordnet ist, wobei der Innenrohrmantel (3) unter Ausbildung eines Ringspalts (4) gegenüber dem Außenrohrmantel (2) beabstandet und durch mindestens ein im Ringspalt (4) angeordnetes Abstandsmittel an einer Innenseite (2a) des Außenrohrmantels (2) abgestützt ist,
**dadurch gekennzeichnet,**
**dass** das mindestens eine Abstandsmittel eine Mehrzahl elastisch ausgebildeter Federelemente (6) aufweist.

2. Rohrleitung (1) nach Anspruch 1,
**dadurch gekennzeichnet,**
**dass** die Federelemente (6) an einem den Innenrohrmantel (3) umgreifenden Stützring (5) angeordnet sind oder einen solchen Stützring (5) bilden.

3. Rohrleitung (1) nach Anspruch 1 oder 2,
**dadurch gekennzeichnet,**
**dass** die, insbesondere in Umfangsrichtung des Stützrings (5) nebeneinander angeordneten, Federelemente (6) sich parallel zu einer Längsrichtung (x) der Rohrleitung (1) erstrecken.

4. Rohrleitung (1) nach Anspruch 2 oder 3,
**dadurch gekennzeichnet,**
**dass** der Stützring (5) einen rohrabschnittsförmigen Grundkörper (5a) besitzt, der von wenigstens einer seiner beiden Längskanten (K1, K2), insbesondere von jeweils beiden Längskanten (K1, K2) ausgehende und sich unter Ausbildung der Federelemente (6) in Richtung der, insbesondere jeweils, gegenüberliegenden Längskante (K1, K2) erstreckende Schlitze (7) aufweist.

5. Rohrleitung (1) nach Anspruch 4,
**gekennzeichnet durch**
eine Anordnung der Schlitze (6) derart, dass eine durch die Schlitze (6) begrenzte, insbesondere verbliebene, Mantelfläche (5b) des Grundkörpers (5a) des Stützrings (5) einen mäanderförmigen Verlauf aufweist.

6. Rohrleitung (1) nach einem der Ansprüche 2 bis 5,
**dadurch gekennzeichnet,**
**dass** der Stützring (5) zumindest abschnittsweise die Form eines, insbesondere einschaligen, Hyperboloids oder Ellipsoids aufweist.

7. Rohrleitung (1) nach einem der Ansprüche 1 bis 6,
**gekennzeichnet durch**
eine Krümmung zumindest einiger Federelemente (6) derart, dass ein zwischen zwei Endabschnitten (6a, 6b) eines gekrümmten Federelements (6) gelegener Mittenabschnitt (6c) dieses Federelements (6) einen zumindest bereichsweisen Kontakt zur Innenseite (2a) des Außenrohrmantels (2) oder zu einer Außenseite (3a) des Innenrohrmantels (3) aufweist.

8. Rohrleitung (1) nach einem der Ansprüche 4 bis 7,
**dadurch gekennzeichnet,**
**dass** die von einer der beiden Längskanten (K1, K2) ausgehenden Schlitze (7) jeweils in eine im Bereich der jeweils gegenüberliegenden Längskante (K1, K2) gelegene Durchgangsöffnung (8) münden.

9. Rohrleitung (1) nach einem der Ansprüche 1 bis 8,
**dadurch gekennzeichnet,**
**dass** der Innenrohrmantel (3) wenigstens zwei Mantelabschnitte (9, 10) besitzt, von denen ein erster Mantelabschnitt (9) eine endseitige, insbesondere als Schiebesitz ausgebildete, Aufweitung (9a) aufweist, in welcher ein Endabschnitt (10a) des zweiten Mantelabschnitts (10) zumindest abschnittsweise, insbesondere längsverschieblich, aufgenommen ist.

10. Rohrleitung (1) nach einem der Ansprüche 1 bis 9,
**dadurch gekennzeichnet,**
**dass** der Außenrohrmantel (2) und der Innenrohrmantel (3) jeweils wenigstens einen, insbesondere mit dem jeweils anderen fluchtenden, Durchgangskanal (11a, 11b) besitzen.
